# EUROPÄISCHE PATENTANMELDUNG

(11) **EP 1 533 529 A2**
(43) Veröffentlichungstag der Anmeldung: **25.05.2005**
(21) Anmeldenummer: 04105875.1
(22) Anmeldetag: 18.11.2004
(51) Int. Cl.: F04D 29/32, F04D 29/38, F04D 21/00

(54) **Verfahren zur Verbesserung der Strömungsverhältnisse in einem Axialkompressor sowie Axialkompressor zur Durchführung des Verfahrens**

(30) Priorität: 24.11.2003 DE 10355108
(71) Anmelder: ALSTOM Technology Ltd, 5400 Baden (CH)
(72) Erfinder: Doerffer, Piotr, 80461, Gdansk (PL); Hubrich, Klaus, 1004, Lausanne (CH); Kappis, Wolfgang, 5442, Fislisbach (CH)

(57) **Zusammenfassung**

Bei einem Verfahren zur Verbesserung der Strömungsverhältnisse auf der Saugseite (21) der Schaufel (12) eines für die Verdichtung von Luft vorgesehenen Axialkompressors (10), bei welchem Verfahren auf der Saugseite (21) in Strömungsrichtung verlaufende Wirbel erzeugt werden, wird auf einfache Weise und sichere Weise eine deutliche Verbesserung dadurch erreicht, dass die Wirbel durch auf der Saugseite (21) ausgebildete, lokale Luftstrahlen (18) erzeugt werden.

## Beschreibung

### TECHNISCHES GEBIET

Die vorliegende Erfindung bezieht sich auf das Gebiet der Kompressortechnik. Sie betrifft ein Verfahren zur Verbesserung der Strömungsverhältnisse auf der Saugseite der Schaufel eines für die Verdichtung von Luft vorgesehenen Axialkompressors gemäss dem Oberbegriff des Anspruchs 1. Sie betrifft weiterhin einen Axialkompressor zur Durchführung des Verfahrens.

### STAND DER TECHNIK

Die erste Stufe des Kompressors (Verdichters) einer Gasturbine arbeitet gewöhnlich im Überschallbereich. Um den Druckanstieg pro Stufe weiter zu erhöhen, ist es wünschenswert, die prä-Schock-Machzahl für ein höheres Druckverhältnis zu erhöhen. Die maximale prä-Schock-Machzahl kann bis zu etwa 1,5 ansteigen. Die mit solchen hohen Machzahlen verknüpften Hauptprobleme sind eine Schock-induzierte Ablösung von Grenzschichten und ein sehr eng begrenzter Arbeitsbereich des Kompressors ("unique incidence condition"). Es wird daher ständig Ausschau gehalten nach Wegen, um das Strömungsverhalten für solche hohen Machzahlen zu verbessern. Gegenwärtig wird die begrenzende prä-Schock-Machzahl für einen Betrieb ohne Grenzschichtenablösung bei 1,3 gesehen.

Um die Widerstandsfähigkeit der Grenzschichten gegen höhere Schock-Machzahlen zu erhöhen, kann einerseits die Kontur der Schaufeln verändert werden (sieh z.B. die US-A-5,554,000 oder die US-A-6,017,186), oder es können andererseits Steuerungsmechanismen für die Grenzschichten eingesetzt werden (siehe z.B. die US-A-5,598,990). Das Potential von Anpassungen der Schaufelkontur erscheint heutzutage weitgehend erschöpft. Daher ist die Steuerung der Grenzschichten der geeignetste Weg, um den Arbeitsbereich und den Druckanstieg für einen Überschall-Kompressor zu vergrössern. Derartige Steuerungsmechanismen für Grenzschichten müssen jedoch einfach aufgebaut sein, damit sie ohne Probleme in die rotierende Maschine eingepasst werden können. Darüber hinaus sollte die Gefahr minimal sein, dass Teile des Mechanismus abfallen und dann die nachfolgenden Stufen beschädigen können. Schliesslich sollte die Steuerung solcher Systeme einfach sein, damit nicht Fehler in der Steuerung zu einem gravierenden Maschinenschaden führen.

Speziell auf dem Gebiet der äusseren Aerodynamik, z.B. bei Flügeln, ist im Hinblick auf Methoden zur Steuerung von Schock bzw. Grenzschichten viel geforscht worden. Die Forschung hat sich dabei anfangs auf flügelförmige Vortexgeneratoren (Wirbel erzeugende Elemente) auf Flugzeugtragflächen konzentriert. Sie hat dazu geführt, dass standardmässig solche flügelförmigen Vortexgeneratoren bei kommerziellen Flugzeugen (z.B. der Boeing 727) eingesetzt wurden, um die Stabilität der Grenzschichten in der Wechselwirkungszone mit dem Schock zu verbessern. Forschungen haben gezeigt (Pearcey et al., Inclined Air-Jets Used as Vortex Generators to Suppress Schock-induced Separation, AGARD Meeting, April 1993), wie wirkungsvoll mit Luftstrahl-Vortexgeneratoren die Strömung in der Wechselwirkungszone zwischen Schock und Grenzschicht stabilisiert werden kann (siehe auch die US-B1-6,302,360).

Auf dem Gebiet der Turbomaschinen ist die Forschung zu Luftstrahl-Vortexgeneratoren sehr viel beschränkter. Der Einsatz von Luftstrahl-Vortexgeneratoren wird hauptsächlich in dem Bereich der Aerodynamik von Turbinen untersucht, weil dort die Schaufeln gekühlt sind und so die notwendige Luft für die Vortexgeneratoren ohnehin zur Verfügung steht (J.P. Bons et al., The Fluid Mechanics of LPT Blade Separation Control Using Pulsed Jets, ASME 2001-GT-0190).

Der mögliche Einsatz von Vortexgeneratoren auf dem Rotor eines Überschall-Kompressors wurde nicht einmal in einem Überblick über Strömungssteuerung aus dem Jahr 2000 erwähnt (W.K. Lord et al., Flow Control Opportunities in Gas Turbine Engines, AIAA June 2000 in Denver, AIAA 2000-2234). Diese Nichterwähnung einer Grenzschichtsteuerung durch Vortexgeneratoren bei Kompressoren hängt sicherlich mit der sehr geringen Schaufeldicke zusammen, die es nicht erlaubt, im Inneren der Schaufel grössere Steuerungsmechanismen unterzubringen. Insbesondere bedeutet dies auch, dass der Raum für ein Plenum, aus dem Luft für Luftstrahl-Vortexgeneratoren bereitgestellt würde, sehr beschränkt ist. Flügelförmige Vortexgeneratoren benötigen zwar nicht unbedingt Steuerungsmechanismen, haben aber den grossen Nachteil, dass bei ihnen immer die Gefahr einer Ablösung von der Oberfläche besteht, die dann zu einer erheblichen Beschädigung der nachfolgenden Stufen führen würde.

### DARSTELLUNG DER ERFINDUNG

Es ist Aufgabe der Erfindung, ein Verfahren und einen Axialkompressor anzugeben, mit welchen auf sichere und einfache Weise, insbesondere ohne die Notwendigkeit von zusätzlichen Einbauten, die Strömungsverhältnisse auf der Saugseite der Schaufeln des Kompressors im Bezug auf die Schockstabilisierung verbessert werden können.

Die Aufgabe wird durch die Gesamtheit der Merkmale der Ansprüche 1 und 7 gelöst. Der Kern der Erfindung besteht darin, dass auf der Saugseite in Strömungsrichtung verlaufende Wirbel durch auf der Saugseite ausgebildete, lokale Luftstrahlen erzeugt werden. Durch die lokalen Luftstrahlen wird der Einsatz von auf den Schaufelflächen angeordneten zusätzlichen Elementen vermieden und die Gefahr eines Abfallens solcher Elemente mit der daraus resultierenden Beschädigung nachfolgender Stufen beseitigt.

Gemäss einer bevorzugten Ausgestaltung des Verfahren nach der Erfindung wird zur Ausbildung der lokalen Luftstrahlen Luft mit einem gegenüber der Umgebung höheren Druck aus ersten Öffnungen in der saugseitigen Oberfläche der Schaufel ausgestossen. Dadurch ist es möglich, aus der Oberfläche der Schaufel herausragende und die Strömung negative beeinflussende Teile zu vermeiden.

Besonders einfach wird das erfindungsgemässe Verfahren, wenn gemäss einer bevorzugten Weiterbildung die Luft mit dem höheren Druck auf der Druckseite der Schaufel aus der Strömung entnommen und durch die Schaufel zu den ersten Öffnungen in der saugseitigen Oberfläche der Schaufel geleitet wird. Hierdurch wird eine stark vereinfachte, automatische Erzeugung der Luftstrahlen verwirklicht, die sich durch einen minimalen Platzbedarf auszeichnet und ausserhalb des Kompressors angeordnete Steuerungsmittel überflüssig macht.

Besonders wirkungsvoll und mit minimalem Aufwand kann das Verfahren durchgeführt werden, wenn dabei jeder ersten Öffnung auf der Saugseite der Schaufel eine zweite Öffnung auf der Druckseite der Schaufel zugeordnet ist, und wenn die Luft mit dem höheren Druck jeweils an der zweiten Öffnung entnommen und über Kanäle in der Schaufel zur zugeordneten ersten Öffnung geleitet wird.

Die Erzeugung der Luftstrahlen lässt sich weiter verbessern, wenn gemäss einer anderen Ausgestaltung der Erfindung zur Erhöhung des Drucks der an der Druckseite entnommenen Luft zusätzlich zum an der Druckseite herrschenden statischen Druck auch der mit der Strömung verbundene dynamische Druck ausgenutzt wird, wobei insbesondere zur Ausnutzung des dynamischen Druckes bei der Entnahme der Luft ein erster Kanal in der Schaufel verwendet wird, welcher in Strömungsrichtung geneigt ist.

Eine bevorzugte Ausgestaltung des erfindungsgemässen Axialkompressors ist dadurch gekennzeichnet, dass die ersten Öffnungen jeweils in der Nähe der Vorderkante der Schaufel angeordnet sind, dass als Quelle für Luft mit einem höheren Druck den ersten Öffnungen auf der Saugseite der Schaufel zweite Öffnungen auf der Druckseite der Schaufel zugeordnet sind, wobei insbesondere jeder ersten Öffnung eine zweite Öffnung zugeordnet ist und über quer durch die Schaufel verlaufende Kanäle mit der ersten Öffnung in Verbindung steht, und dass im Inneren der Schaufel hinter der zweiten Öffnung jeweils ein erster Kanal angeordnet ist, welcher in Strömungsrichtung verläuft und mit der druckseitigen Oberfläche der Schaufel einen spitzen Winkel, insbesondere von etwa 20°, einschliesst.

Bevorzugt ist im Inneren der Schaufel hinter der ersten Öffnung jeweils ein zweiter Kanal angeordnet, welcher in Strömungsrichtung verläuft, und welcher mit der druckseitigen Oberfläche der Schaufel einen spitzen Winkel, insbesondere von etwa 60°, einschliesst, wobei der zweite Kanal aus der vom ersten Kanal und der Strömungsrichtung aufgespannten Ebene um einen Winkel, vorzugsweise von etwa 45°, heraus gekippt ist. Der erste und zweite Kanal münden im Inneren der Schaufel ineinander.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Draufsicht in radialer Richtung mehrere Schaufeln eines Schaufelkranzes eines Axialkompressors mit Luftstrahlen als Vortexgeneratoren gemäss einem bevorzugten Ausführungsbeispiel der Erfindung;
- Fig. 2: in einem Querschnitt eine bevorzugte Ausgestaltung der Vortexgeneratoren nach der Erfindung mit unterschiedlich geneigten Verbindungskanälen zwischen Druck- und Saugseite der Schaufel;
- Fig. 3: den Verlauf der Verbindungskanäle aus Fig. 2 in Strömungsrichtung gesehen; und
- Fig. 4: in einer Seitenansicht die Saugseite einer Schaufel aus Fig. 1 mit den in einer radialen Reihe angeordneten Öffnungen der Vortexgeneratoren.

### WEGE ZUR AUSFÜHRUNG DER ERFINDUNG

Die vorliegende Erfindung beinhaltet ein Verfahren und eine Vorrichtung zur Erzeugung von in Strömungsrichtung verlaufenden Wirbeln (vortices) mittels Luftstrahlen auf den Schaufeln eines Überschall-Kompressors, wodurch die Strömungsverhältnisse auf der Saugseite der Schaufeln verbessert werden. Die Schockfront kann dadurch stabilisiert und der Arbeitsbereich und das Druckverhältnis des Kompressors können so vergrössert werden. Zusätzlich ergibt sich durch das angewandte Verfahren eine Saugwirkung auf der Druckseite der Schaufeln, welche den Zustand der Grenzschicht nach der Wechselwirkung mit der Schockwelle auf der Druckseite verbessert.

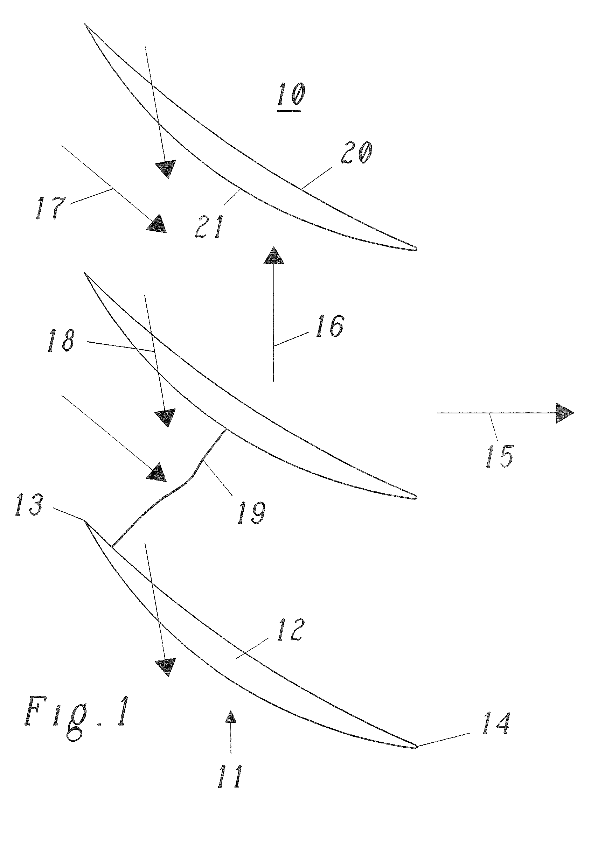

In den Fig. 1-4 ist ein bevorzugtes Ausführungsbeispiel der Erfindung wiedergegeben. Fig. 1 zeigt in der radialen Draufsicht mehrere Schaufeln 12 eines Schaufelkranzes 11 eines Axialkompressors 10. Sofern es sich bei den Schaufeln 12 um auf dem Rotor angeordnete Laufschaufeln handelt, bewegen sich diese Schaufeln in einer Drehrichtung 16. Die Schaufeln 12 haben jeweils eine Vorderkante 13 und eine Hinterkante 14 sowie eine Druckseite 20 und eine Saugseite 21. Mit 15 ist in Fig. 1 die axiale Richtung des Axialkompressors 10 bezeichnet, mit 17 die zwischen den Schaufeln 12 hindurchgehende Strömung, die eine Schockwellenfront 19 ausbilden kann. Zur Erzeugung von Wirbeln werden nun durch die Schaufeln 12 hindurch Luftstrahlen ("air jets") 18 erzeugt, die in Fig. 1 durch entsprechende Pfeile angedeutet sind. Die Luftstrahlen 18 treten aus der Saugseite 21 der Schaufel 12 aus und verursachen dort in Wechselwirkung mit der Strömung 17 in Strömungsrichtung sich erstreckende Wirbel. Die treibende Kraft für die Luftstrahlen 18 ist der Druckunterschied zwischen der Druckseite 20 und der Saugseite 21. Das statische Druckverhältnis zwischen der Druckseite 20 und der Saugweite 21 kann zu 1,4 abgeschätzt werden. Dieser Wert erhöht sich, wenn zusätzlich zum statischen Druck auch noch ein dynamischer Druck auf der Druckseite 20 ausgenutzt wird, wie weiter unten noch erklärt werden wird.

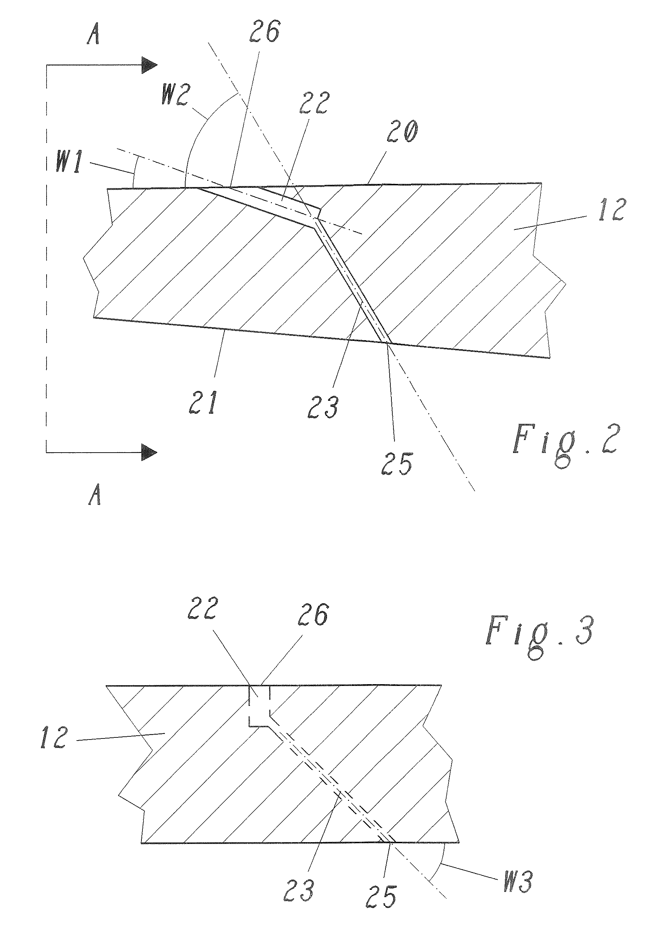

In Fig. 2 ist in einem vergrösserten Ausschnitt der Querschnitt durch eine Schaufel 12 gemäss Fig. 1 in Höhe eines Luftstrahls dargestellt. Von der Druckseite 20 der Schaufel 12 geht ein erster Kanal bzw. eine Bohrung 22 unter einer geringen Neigung mit einem Winkel W1 von 20° relativ zur druckseitigen Schaufeloberfläche in das Innere der Schaufel 12. Das äussere Ende des ersten Kanals 22 bildet in der druckseitigen Oberfläche eine Öffnung 26, durch welche die Luft von der Druckseite 20 her in die Schaufel 12 eintritt. Der erste Kanal 22 hat vorzugsweise einen Durchmesser von etwa 1 mm. Der erste Kanal 22 endet im Inneren der Schaufel 12. Vom inneren Ende des ersten Kanals 22 aus verläuft ein zweiter, steilerer Kanal 23 mit einem Winkel W2 von etwa 60° zur druckseitigen Schaufeloberfläche bis zur saugseitigen Schaufeloberfläche und endet dort mit einer Öffnung 25, durch welche die Luft als Luftstrahl 18 austritt. Der Durchmesser des zweiten Kanals bzw. der zweiten Bohrung 23 beträgt etwa 0,4 mm. Blickt man in Richtung der in Fig. 2 eingezeichneten Pfeile A auf die Kanäle 22, 23, so ergibt sich die in Fig. 3 wiedergegebene Ansicht. Während die Projektion des ersten Kanals 22 senkrecht nach unten verläuft, ist die Projektion des zweiten Kanals um etwa 45° zur Seite geneigt. So dass die Luftstrahlen nicht nur in Strömungsrichtung schräg nach vorne austreten, sondern auch zu einer Seite hin gekippt sind. Die Schrägstellung des ersten Kanals 22 bewirkt, das zusätzlich zum statischen auch der dynamische Druck auf der Druckseite 20 der Schaufel aufgenommen und zur Erzeugung der Luftstrahlen ausgenutzt wird.

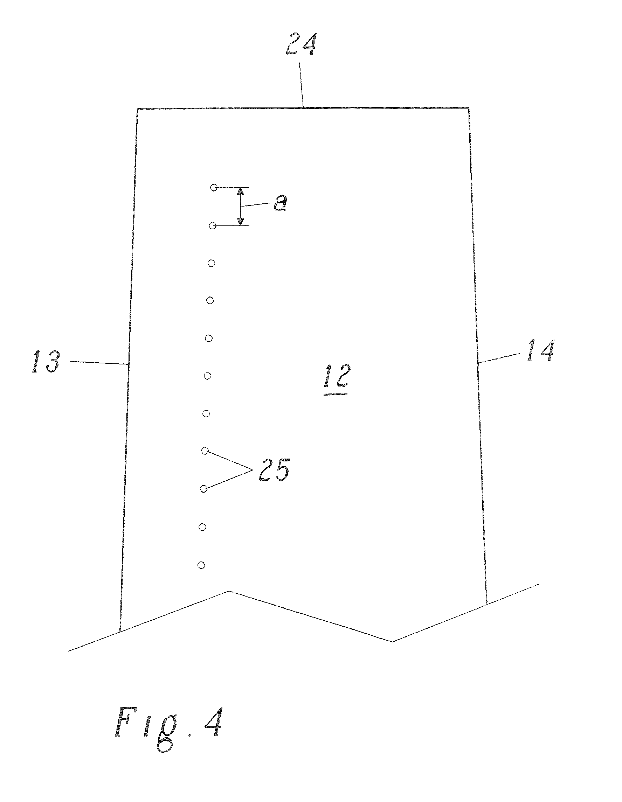

Wie der in Fig. 4 wiedergegebene seitliche Blick auf die Schaufel 12 mit der obenliegenden Schaufelspitze 24 zeigt, ist in radialer Richtung auf der Saugseite eine Reihe von zweiten Öffnungen 25 mit entsprechender Lufteinspeisung von der Druckseite her angeordnet. Die zweiten Öffnungen 25 sind gleichmässig beabstandet mit einem bevorzugten Abstand a von etwa 4 mm.

Ein wesentliches Merkmal der dargestellten Lösung ist eine Anordnung einer Mehrzahl von Durchgängen durch die Schaufel von der Druckseite zur Saugseite in einer Reihe, die sich in radialer Richtung erstreckt. Die besonderen Vorteile dieser Lösung sind:
- Es werden dabei keine zusätzlichen Teile eingeführt, die sich von der Schaufel ablösen und Schaden verursachen könnten.
- Die Versorgung mit unter Druck stehender Luft erfolgt an der Schaufel selbsttätig durch den Druckunterschied zwischen Druckseite und Saugseite.
- Es wird kein externer Steuer- und Kontrollmechanismus benötigt.
- Die Lösung kann leicht nachträglich implementiert werden.
- Der Arbeitsbereich des Kompressors und das Druckverhältnis werden auf einfache Weise deutlich vergrössert.

### BEZUGSZEICHENLISTE

- 10: Axialkompressor
- 11: Schaufelkranz
- 12: Schaufel
- 13: Vorderkante (Schaufel)
- 14: Hinterkante (Schaufel)
- 15: axiale Richtung
- 16: Drehrichtung
- 17: Strömung
- 18: Luftstrahl
- 19: Schockwellenfront
- 20: Druckseite (Schaufel)
- 21: Saugseite (Schaufel)
- 22,23: Kanal
- 24: Schaufelspitze
- 25,26: Öffnung
- a: Abstand
- W1,W2,W3: Winkel

## Patentansprüche

1. Verfahren zur Verbesserung der Strömungsverhältnisse auf der Saugseite (21) der Schaufel (12) eines für die Verdichtung von Luft vorgesehenen Axialkompressors (10), bei welchem Verfahren auf der Saugseite (21) in Strömungsrichtung verlaufende Wirbel erzeugt werden, **dadurch gekennzeichnet, dass** die Wirbel durch auf der Saugseite (21) ausgebildete, lokale Luftstrahlen (18) erzeugt werden.

2. Verfahren nach Anspruch 1, **dadurch gekennzeichnet, dass** zur Ausbildung der lokalen Luftstrahlen (18) Luft mit einem gegenüber der Umgebung höheren Druck aus ersten Öffnungen (25) in der saugseitigen Oberfläche der Schaufel (12) ausgestossen wird.

3. Verfahren nach Anspruch 2, **dadurch gekennzeichnet, dass** die Luft mit dem höheren Druck auf der Druckseite (20) der Schaufel (12) aus der Strömung (17) entnommen und durch die Schaufel (12) zu den ersten Öffnungen (25) in der saugseitigen Oberfläche der Schaufel (12) geleitet wird.

4. Verfahren nach Anspruch 3, **dadurch gekennzeichnet, dass** jeder ersten Öffnung (25) auf der Saugseite (21) der Schaufel (12) eine zweite Öffnung (26) auf der Druckseite (20) der Schaufel (12) zugeordnet ist, und dass die Luft mit dem höheren Druck jeweils an der zweiten Öffnung (26) entnommen und über Kanäle (22, 23) in der Schaufel (12) zur zugeordneten ersten Öffnung (25) geleitet wird.

5. Verfahren nach Anspruch 3 oder 4, **dadurch gekennzeichnet, dass** zur Erhöhung des Drucks der an der Druckseite (20) entnommenen Luft zusätzlich zum an der Druckseite herrschenden statischen Druck auch der mit der Strömung verbundene dynamische Druck ausgenutzt wird.

6. Verfahren nach Anspruch 5, **dadurch gekennzeichnet, dass** zur Ausnutzung des dynamischen Druckes bei der Entnahme der Luft ein erster Kanal (22) in der Schaufel (12) verwendet wird, welcher in Strömungsrichtung geneigt ist.

7. Axialkompressor (10) zur Durchführung des Verfahrens nach einem der Ansprüche 1 bis 6, welcher Axialkompressor (10) wenigstens einen Schaufelkranz (11) von sich in radialer Richtung erstreckenden Schaufeln (12) umfasst, **dadurch gekennzeichnet, dass** jede der Schaufeln (12) auf der Saugseite (21) eine sich in radialer Richtung erstreckende Reihe von ersten Öffnungen (25) aufweist, welche jeweils mit einer Quelle (26) für Luft mit einem höheren Druck in Verbindung stehen.

8. Axialkompressor nach Anspruch 7, **dadurch gekennzeichnet, dass** die ersten Öffnungen (25) jeweils in der Nähe der Vorderkante (13) der Schaufel (12) angeordnet sind.

9. Axialkompressor nach Anspruch 7 oder 8, **dadurch gekennzeichnet, dass** als Quelle für Luft mit einem höheren Druck den ersten Öffnungen (25) auf der Saugseite (21) der Schaufel (12) zweite Öffnungen (26) auf der Druckseite (20) der Schaufel (12) zugeordnet sind.

10. Axialkompressor nach Anspruch 9, **dadurch gekennzeichnet, dass** jeder ersten Öffnung (25) eine zweite Öffnung (26) zugeordnet ist und über quer durch die Schaufel (12) verlaufende Kanäle (22, 23) mit der ersten Öffnung (25) in Verbindung steht.

11. Axialkompressor nach Anspruch 10, **dadurch gekennzeichnet, dass** im Inneren der Schaufel (12) hinter der zweiten Öffnung (26) jeweils ein erster Kanal (22) angeordnet ist, welcher in Strömungsrichtung verläuft und mit der druckseitigen Oberfläche der Schaufel (12) einen spitzen Winkel (W1), insbesondere von etwa 20°, einschliesst.

12. Axialkompressor nach Anspruch 11, **dadurch gekennzeichnet, dass** der erste Kanal (22) einen Durchmesser von etwa 1 mm aufweist.

13. Axialkompressor nach Anspruch 11 oder 12, **dadurch gekennzeichnet, dass** im Inneren der Schaufel (12) hinter der ersten Öffnung (25) jeweils ein zweiter Kanal (23) angeordnet ist, welcher in Strömungsrichtung verläuft, und welcher mit der druckseitigen Oberfläche der Schaufel (12) einen spitzen Winkel (W2), insbesondere von etwa 60°, einschliesst.

14. Axialkompressor nach Anspruch 13, **dadurch gekennzeichnet, dass** der zweite Kanal (23) aus der vom ersten Kanal (22) und der Strömungsrichtung (17) aufgespannten Ebene um einen Winkel (W3), vorzugsweise von etwa 45°, heraus gekippt ist.

15. Axialkompressor nach Anspruch 13 oder 14, **dadurch gekennzeichnet, dass** der zweite Kanal (23) einen Durchmesser von etwa 0,4 mm aufweist.

16. Axialkompressor nach einem der Ansprüche 13 bis 15, **dadurch gekennzeichnet, dass** der erste und zweite Kanal (22, 23) im Inneren der Schaufel (12) ineinander münden.

17. Axialkompressor nach einem der Ansprüche 7 bis 16, **dadurch gekennzeichnet, dass** die ersten Öffnungen (25) jeder Schaufel (12) untereinander gleichmässig beabstandet sind und einen Abstand (a) von etwa 4 mm aufweisen.
